# EUROPEAN PATENT SPECIFICATION

(11) **EP 0 217 509 B1**
(45) Date of publication and mention of the grant of the patent: **05.10.1994**
(21) Application number: 86305962.2
(22) Date of filing: 01.08.1986
(51) Int. Cl.: G01L 27/00

(54) **Self-zeroing transducer assemblies**
Druckwandleraufstellungen mit automatischer Nullung
Assemblages de transducteurs de pression à autoréglage du zéro

(30) Priority: 12.08.1985 US 764916
(43) Date of publication of application: 08.04.1987
(73) Proprietor: INTERNATIONAL CONTROL AUTOMATION FINANCE S.A., Ville de Luxembourg (LU)
(72) Inventor: Bastijanic, Edward, Concord Ohio 44077 (US); Sterling, Edward Lee, Jr., Cleveland Ohio 44111 (US); Robertson, John Walter, Jr., Chesterland Ohio 44020 (US)
(74) Representative: Cotter, Ivan John

(56) References cited:
- EP-A- 0 097 479
- WO-A-83/02004
- US-A- 3 509 767
- PATENT ABSTRACTS OF JAPAN, vol. 8, no. 6 (P-247)[1443], 12th January 1984; & JP-A-58 168 933

## Description

This invention relates to self-zeroing pressure transducer assemblies or transmitters.

Two-wire analog transmission systems are known. Such systems include a transmitter which is connected to a power supply by two wires which form a current loop. The transmitter includes, as at least one of its features, a transducer which senses a condition such as pressure or temperature. This condition is known as a process variable (PV).

A power supply is connected to the two wires to close the current loop. It is also known to provide a resistor in the current loop. The transmitter amplifies the signal from its transducer and this amplified signal is used to draw a certain current from the power supply which is proportional or otherwise related to the process variable. It is known to draw from a minimum of 4 mA to a maximum of 20 mA. The current between 4 and 20 mA passes through the resistor to produce a voltage drop across the resistor. This voltage drop can be measured to give a value for the process variable.

It is noted that the 4 mA minimum current is required to energise the circuitry of the transmitter. Any excess current above this 4 mA level is taken as a value which can be used to determine the process variable.

It is known that such 4-20 mA two-wire systems have an accuracy which is limited to around 0.1% at best. These systems are also essentially unidirectional with the transmitter being essentially uncontrolled and transmitting continuously.

The transmitters in such circuits are generally limited in accuracy to about 0.1% and their functionality is limited to only continuous reading and sensing of the process variable.

US Patent No US-A-3 509 767 discloses a self-zeroing pressure transducer assembly comprising:
a pressure transducer having two inputs;
a first pressure line connected to a first of the two inputs;
a second pressure line connected to the second of the two inputs;
a first valve in the first pressure line;
a second valve in the second pressure line;
a pressure equalising connecting line connected between the first and second pressure lines at a point on the first and second pressure lines between the first and second valves and the transducer;
a pressure equalising valve in the connecting line;
a switch means connected to the first valve and the pressure equalising valve and functioning, upon receiving one control signal, to open the first valve while maintaining the pressure equalising valve closed whereby the two inputs of the pressure transducer are exposed to separate pressures on the first and second pressure lines, and, upon receiving another control signal, to close the first valve while opening the pressure equalising valve so as to equalise the pressure between the first and second pressure lines and thus equalise the pressure at the two inputs of the transducer; and
control means connected to the pressure transducer for receiving a pressure signal therefrom and connected to the switch means for generating said one and said other control signals, the control means being operative to provide self-zeroing of the pressure transducer assembly in response to the value of the pressure signal produced by the pressure transducer when said other control signal is generated.

According to one aspect of the present invention there is provided a self-zeroing pressure transducer assembly as just defined, characterised in that said control means is operable to generate said other control signal after a preselected time interval or when desired by a user and the control means comprises a microprocessor which is responsive to the value of the pressure signal produced by the pressure transducer when the switch means receives said other control signal to provide self-zeroing of the pressure transducer assembly by recalibrating the pressure transducer assembly such that, when said one control signal is thereafter generated, said value of the pressure signal is treated as a zero indication for the pressure transducer until said other signal is again generated, wherein the microprocessor is operative to generate said other control signal, in place of said one control signal, each time that a preselected maintenance time interval, in accordance with suspected drift of the pressure transducer from its zero position, has elapsed.

US-A-3 509 767 also discloses a method of operating a pressure transducer assembly having a transducer with two inputs for receiving two separate pressures on two separate pressure lines, the method comprising:
establishing communication between the two separate pressure lines while closing off communication between external separate pressures connected to the pressure lines and the pressure transducer for equalising a pressure between the first and second pressure lines;
measuring an output signal from the transducer with the communication established between the first and second pressure lines; and
utilising the measured output signal from the transducer assembly to effect self-zeroing of the pressure transducer assembly.

According to another aspect of the invention there is provided a method as just described, characterised in that communication between the two separate pressure lines is established after a preselected time interval or when desired by a user and said utilisation step comprises supplying the measured output signal to a microprocessor which is responsive to the value of the measured output signal to provide self-zeroing of the pressure transducer assembly by recalibrating the pressure transducer assembly such that, when said communication between the two separate pressure lines is thereafter disestablished, said value of the measured output signal is treated as a zero indication for the pressure transducer until said communication between the two separate pressure lines is again established, and in that the microprocessor is operative to cause said disestablishment of the communication between the two separate pressure lines after recalibration, wherein the microprocessor establishes said communication between the two separate pressure lines each time that a preselected maintenance time interval, in accordance with suspected drift of the pressure transducer from its zero position, has elapsed.

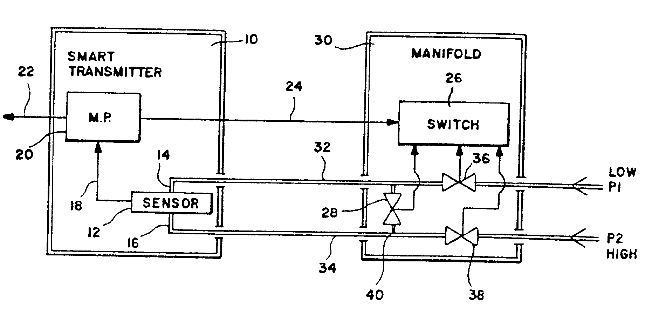

The invention will now be further described, by way of illustrative and non-limiting example, with reference to the accompanying drawing, the sole figure of which is a block diagram showing a pressure transducer arrangement or assembly embodying the invention.

The sole figure of the drawing shows a pressure transducer arrangement which includes a so-called smart transmitter 10 that incorporates a differential pressure transducer or pressure sensor 12 having two inputs 14 and 16 for receiving two separate pressures P1 and P2, respectively, and for generating a signal on a line 18 which corresponds to or is proportional to the difference between the pressures P1 and P2.

The smart transmitter 10 includes a control circuit 20, which is a microprocessor, such as a Motorola 6800 based processor or an Intel 80C51, and which receives the signal on the line 18 and outputs a signal on a line 22 which can for example be utilised on a two-wire current loop.

The microprocessor 20 is connected by a line 24 to a switch means 26. The switch means 26 is incorporated in a pressure manifold 30, such as Anderson Greenwood's remote actuating manifold. A first pressure line 32 conveys the pressure P1 to the input 14 of the sensor 12. A second pressure line 34 conveys the pressure P2 to the other input 16 of the sensor 12. The first and second pressure lines 32,34 pass through the manifold 30. A first valve 36 is in the first pressure line 32 and a second valve 38 is in the second pressure line 34. A connecting line 40 interconnects the first and second pressure lines 32,34 at a point between the inputs 14,16 of the sensor 12 and the valves 36,38. The connecting line 40 is provided with an equalising valve 28.

Upon receipt of signals from the microprocessor 20 on the line 24, the switching means 26 operates to open the valves 36 and 38 while maintaining the valve 28 closed. This exposes the inputs 14 and 16 of the sensor 12 to the pressures P1 and P2 so that the sensor 12 can generate its signal on the line 18. When it is suspected that the transducer 12 has drifted from its zero position, or at a preselected maintenance time interval for the transducer 12, a signal is provided on the line 24 from the microprocessor 20 to the switching means 26 to close the valve 36 while opening the valve 28. This blocks the lower pressure P1 while establishing a communication over the line 40 between the first and second pressure lines 32,34. This automatically equalises the pressures in the lines 32 and 34 where they communicate with the pressure transducer 12. At this point the signal on the line 18 is treated, by the microprocessor 20, to be a zero indication for the transducer 12. This effects a recalibration of the smart transmitter 10. After a time period which is sufficient to establish an equalisation of pressures on the lines 32 and 34, a control signal is provided on the line 24 to the switch means 26 to open the valves 36,38 and simultaneously to close the valve 28. Once exposed to the pressures P1 and P2, any changes in the signal from the sensor 12 on the line 18 are interpreted and correspond to pressure differences between P1 and P2.

## Claims

1. A self-zeroing pressure transducer assembly comprising:
a pressure transducer (12) having two inputs (14,16);
a first pressure line (32) connected to a first (14) of the two inputs (14,16);
a second pressure line (34) connected to the second (16) of the two inputs (14,16);
a first valve (36) in the first pressure line (32);
a second valve (38) in the second pressure line (34);
a pressure equalising connecting line (40) connected between the first and second pressure lines (32,34) at a point on the first and second pressure lines between the first and second valves (36,38) and the transducer (12);
a pressure equalising valve (28) in the connecting line (40);
a switch means (26) connected to the first valve (36) and the pressure equalising valve (28) and functioning, upon receiving one control signal, to open the first valve (36) while maintaining the pressure equalising valve (28) closed whereby the two inputs (14, 16) of the pressure transducer (12) are exposed to separate pressures on the first and second pressure lines (32, 34), and, upon receiving another control signal, to close the first valve (36) while opening the pressure equalising valve (28) so as to equalise the pressure between the first and second pressure lines (32,34) and thus equalise the pressure at the two inputs (14,16) of the transducer (12); and
control means (20) connected to the pressure transducer (12) for receiving a pressure signal therefrom and connected to the switch means (26) for generating said one and said other control signals, the control means (20) being operative to provide self-zeroing of the pressure transducer assembly in response to the value of the pressure signal produced by the pressure transducer (12) when said other control signal is generated;
characterised in that said control means (20) is operable to generate said other control signal after a preselected time interval or when desired by a user and the control means comprises a microprocessor (20) which is responsive to the value of the pressure signal produced by the pressure transducer (12) when the switch means (26) receives said other control signal to provide self-zeroing of the pressure transducer assembly by recalibrating the pressure transducer assembly such that, when said one control signal is thereafter generated, said value of the pressure signal is treated as a zero indication for the pressure transducer (12) until said other signal is again generated, wherein the microprocessor (20) is operative to generate said other control signal, in place of said one control signal, each time that a preselected maintenance time interval, in accordance with suspected drift of the pressure transducer (12) from its zero position, has elapsed.

2. A self-zeroing transducer assembly according to claim 1, wherein the valves (36,38,28) and the switching means (26) are incorporated in a pressure manifold (30) embracing the first and second pressure lines (32,34) and the connecting line (40).

3. A self-zeroing pressure transducer assembly according to claim 1 or claim 2, wherein the microprocessor (20) is operative to output a signal suitable for utilisation on a two-wire loop.

4. A self-zeroing pressure transducer assembly according to claim 1, claim 2 or claim 3, wherein the microprocessor is a Motorola 6800 processor.

5. A self-zeroing pressure transducer assembly according to any one of the preceding claims, wherein the pressure manifold (30) is a remote actuating manifold.

6. A method of operating a pressure transducer assembly having a transducer (12) with two inputs (14,16) for receiving two separate pressures (P1,P2) on two separate pressure lines (31,34), the method comprising:
establishing communication between the two separate pressure lines (32,34) while closing off communication between external separate pressures (P1,P2) connected to the pressure lines (32,34) and the pressure transducer (12) for equalising a pressure between the first and second pressure lines;
measuring an output signal from the transducer (12) with the communication established between the first and second pressure lines (32,34); and
utilising the measured output signal from the transducer assembly to effect self-zeroing of the pressure transducer assembly;
characterised in that communication between the two separate pressure lines (32,34) is established after a preselected time interval or when desired by a user and said utilisation step comprises supplying the measured output signal to a microprocessor (20) which is responsive to the value of the measured output signal to provide self-zeroing of the pressure transducer assembly by recalibrating the pressure transducer assembly such that, when said communication between the two separate pressure lines (32,34) is thereafter disestablished, said value of the measured output signal is treated as a zero indication for the pressure transducer (12) until said communication between the two separate pressure lines is again established, and in that the microprocessor is operative to cause said disestablishment of the communication between the two separate pressure lines (32,34) after recalibration, wherein the microprocessor (20) establishes said communication between the two separate pressure lines (32,34) each time that a preselected maintenance time interval, in accordance with suspected drift of the pressure transducer (12) from its zero position, has elapsed.

7. A method according to claim 6, for operating a pressure transducer assembly in which the two separate pressure lines (32,34) are enclosed in a pressure manifold (30).

## Patentansprüche

1. Selbständig auf Null abgleichender Druckwandleraufbau mit:
einem Druckwandler (12), der zwei Eingänge (14, 16) hat,
einer ersten Druckleitung (32), die mit einem ersten (14) der beiden Eingänge (14, 16) verbunden ist,
einer zweiten Druckleitung (34), die mit dem zweiten (16) der beiden Eingänge (14, 16) verbunden ist,
einem ersten Ventil (36) in der ersten Druckleitung (32),
einem zweiten Ventil (38) in der zweiten Druckleitung (34),
einer Druckausgleichsverbindungsleifung (40), die die ersten und zweiten Druckleitungen (32, 34) an einem Punkt der ersten und zweiten Druckleitungen miteinander verbindet, der zwischen den ersten und zweiten Ventilen (38, 38) und dem Wandler (12) liegt,
einem Druckausgleichsventil (28) In der Verbindungsleitung (40),
einer Schalteinrichtung (26), die mit dem ersten Ventil (36) und dem Druckausgleichsventil (28) verbunden ist und auf Empfang eines Steuersignales so funktioniert, daß sie das erste Ventil (36) öffnet, während sie das Druckausgleichsventil (28) geschlossen hält, wodurch die beiden Eingänge (14, 16) des Druckwandlers (12) getrennten Drücken in den ersten und zweiten Druckleitungen (32, 34) ausgesetzt sind, und weiterhin so funktioniert, daß sie nach Empfang eines weiteren Steuersignales das erste Ventil (36) schließt, während sie das Druckausgleichsventil (28) öffnet, um so den Druck zwischen den ersten und zweiten Druckleitungen (32, 34) auszugleichen und damit den Druck an den beiden Eingängen (14, 16) des Wandlers (12) auszugleichen, und
einer Steuereinrichtung (20), die mit dem Druckwandler (12) verbunden ist, um von diesem ein Drucksignal aufzunehmen, und mit der Schalteinrichtung (26) verbunden ist, um das erwähnte eine und das erwähnte andere Steuersignal zu erzeugen, wobei die Steuereinrichtung (20) so betreibbar ist, daß sie einen selbständigen Nullabgleich des Druckwandleraufbau bereit stellt unter Ansprechen auf den Wert des Drucksignales, welches durch den Druckwandler (12) erzeugt wird, wenn das erwähnte andere Steuersignal erzeugt wird,
**dadurch gekennzeichnet,** daß die Steuereinrichtung (20) so betreibbar ist, daß sie das andere Steuersignal nach einem vorgewählten Zeitinterwall oder dann, wenn es von einem Benutzer gewünscht wird, erzeugt, und daß die Steuereinrichtung einen Mikroprozessor (20) aufweist, der auf den Wert des Drucksignales anspricht, der von dem Druckwandler (12) erzeugt wird, wenn die Schalteinrichtung (26) das andere Steuersignal empfängt, um einen selbständigen Nullabgleich des Druckwandlers bereitzustellen, indem der Druckwandler derart neu eingestellt wird, daß, wenn das eine Steuersignal anschließend erzeugt wird, der Wert des Drucksignales als Anzeige einer 0 für den Druckwandler (12) behandelt wird, bis das andere Signal erneut erzeugt wird, wobei der Mikroprozessor (20) so betreibbar ist, daß er das andere Steuersignal an Stelle des einen Steuersignales jedesmal dann erzeugt, wenn ein vorgewähltes Wartungszeltinterwall, entsprechend der vermuteten Drift des Druckwandlers (12) aus seiner Nullposition, vergangen ist.

2. Druckwandleraufbau mit selbständigem Nullabgleich nach Anspruch 1, wobei die Ventile (36, 38, 28) und die Schalteinrichtung (26) in einem Druckverteiler (30) eingebaut sind, der die ersten und zweiten Druckleitungen (32, 34) und die Verbindungsleitung (40) umfaßt.

3. Druckwandleraufbau mit selbständigem Nullabgleich nach Anspruch 1 oder 2, wobei der Mikroprozessor (20) so betreibbar ist, das er ein Signal ausgibt, welches für die Verwendung in einer Zweidrahtschleife geeignet ist.

4. Druckwandleraufbau mit selbständigem Nullabgleich nach Anspruch 1,2 oder 3, wobei der Mikroprozessor ein Motorola 6800 Prozessor ist.

5. Druckwandleraufbau mit selbständigem Nullabgleich nach einem der vorstehenden Ansprüche, wobei der Druckverteiler (30) ein Verteiler mit Fernbetätigung ist.

6. Verfahren zum Betreiben eines Druckwandleraufbaus, der einen Druckwandler (12) mit zwei Eingängen (14, 16) für die Aufnahme zweier getrennter Drücke (P1, P2) auf zwei getrennten Druckleitungen (31, 34) hat, wobei das Verfahren aufweist:
Bereitstellen einer Verbindung zwischen den beiden getrennten Druckleitungen (32, 34) während die Verbindung zwischen den äußeren getrennten Drücken (P1, P2) welche mit dem Druckleitungen (32, 34) verbunden sind, und dem Druckwandler (12) unterbrochen wird, um den Druck zwischen den ersten und zweiten Druckleitungen auszugleichen,
Messen eines Ausgangssignales von dem Wandler (12), während die Verbindung zwischen den ersten und zweiten Druckleitungen (32, 34) besteht, und
Verwenden des gemessenen Ausgangsignales von dem Wandleraufbau, um einen selbständigen Nullabgleich des Druckwandleraufbaus zu bewirken,
**dadurch gekennzeichnet,** daß die Verbindung zwischen den beiden getrennten Druckleitungen (32, 34) nach einem vorgewählten Zeitinterwall oder dann, wenn es ein Benutzer wünscht, bereitgestellt wird, und daß der Schritt der Verwendens des Ausgangssignales die Eingabe des gemessenen Ausgangssignales in einen Mikroprozessor (20) beinhaltet, der auf den Wert des gemessenen Ausgangssignales so anspricht, daß er einen Selbst-Nullabgleich des Druckwandleraufbaus bereitstellt, indem der Druckwandleraufbau derart neu kalibriert wird, daß dann, wenn die Verbindung zwischen den beiden getrennten Druckleitungen (32, 34) anschließend beendet wird, der Wert des gemessenen Ausgangssignales als Nullanzeige für den Druckwandler (12) behandelt wird, bis die Verbindung zwischen den beiden getrennten Druckleitungen wieder hergestellt wird, und daß der Mikroprozessor so betreibbar ist, daß er die Unterbrechung der Verbindung zwischen den beiden getrennten Druckleitungen (32, 34) nach der Neukalibrierung bewirkt, wobei der Mikroprozesor (20) die Verbindung zwischen den beiden getrennten Druckleitungen jedesmal dann herstellt, wenn ein vorbestimmtes Zeitinterwall für die Wartung, entsprechend der vermuteten Drift des Druckwandlers aus seiner Nullposition, verstrichen ist.

7. Verfahren nach Anspruch 6, **dadurch gekennzeichnet,** daß es für einen Druckwandleraufbau angewendet wird, bei welchem die beiden getrennten Druckleitungen (32,34) in einem Druckverteiler (30) enthalten sind.

## Revendications

1. Ensemble transducteur de pression à réglage automatique du zéro comprenant :
un transducteur de pression (12) ayant deux entrées (14, 16) ;
une première canalisation de pression (32) connectée à une première (14) des deux entrées (14, 16) ;
une seconde canalisation de pression (34) connectée à la seconde (16) des deux entrées (14, 16) ;
une première soupape (36) dans la première canalisation de pression (32) ;
une seconde soupape (38) dans la seconde canalisation de pression (34) ;
une canalisation de connexion d'égalisation de pression (40) raccordée entre les première et seconde canalisations de pression (32, 34) en un point des première et seconde canalisations de pression situé entre les première et seconde soupapes (36, 38) et le transducteur (12) ;
une soupape d'égalisation de pression (28) dans la canalisation de connexion (40) ;
un moyen de commutation (26) connecté à la première soupape (36) et à la soupape d'égalisation de pression (28) et servant, lors de la réception d'un signal de commande, à ouvrir la première soupape (36) tout en maintenant fermée la soupape d'égalisation de pression (28), ce par quoi les deux entrées (14, 16) du transducteur de pression (12) sont exposées à des pressions différentes sur les première et seconde canalisations de pression (32, 34), et, lors de la réception d'un autre signal de commande, à fermer la première soupape (36) tout en ouvrant la soupape d'égalisation de pression (28) de manière à égaliser la pression entre les première et seconde canalisations de pression (32, 34) et à égaliser ainsi la pression aux deux entrées (14, 16) du transducteur (12) ; et,
un moyen de commande (20) connecté au transducteur de pression (12) pour recevoir de celui-ci un signal de pression et connecté au moyen de commutation (26) pour produire ledit un et ledit autre signaux de commande, le moyen de commande (20) servant à réaliser le réglage automatique du zéro de l'ensemble transducteur de pression en réponse à la valeur du signal de pression produit par le transducteur de pression (12) lorsque ledit autre signal de commande est produit ;
caractérisé en ce que ledit moyen de commande (20) sert à produire ledit autre signal de commande après un intervalle de temps prédéterminé ou lorsqu'un utilisateur le souhaite, et en ce que le moyen de commande comprend un microprocesseur (20) qui est sensible à la valeur du signal de pression produit par le transducteur de pression (12) lorsque le moyen de commutation (26) reçoit ledit autre signal de commande pour réaliser le réglage automatique du zéro de l'ensemble transducteur de pression en recalibrant l'ensemble transducteur de pression de telle manière que, lorsque ledit un signal de commande est ensuite produit, ladite valeur du signal de pression est traitée comme une indication de zéro pour le transducteur de pression (12) jusqu'à ce que ledit autre signal soit de nouveau produit, le microprocesseur (20) servant à produire ledit autre signal de commande, à la place dudit un signal de commande, chaque fois qu'un intervalle de temps de maintenance prédéterminé, en fonction d'une dérive supposée du transducteur de pression (12) par rapport à sa position de zéro, s'est écoulé.

2. Ensemble transducteur à réglage automatique du zéro selon la revendication 1, dans lequel les soupapes (36, 38, 28) et le moyen de commutation (26) sont incorporés dans un distributeur de pression (30) contenant les première et seconde canalisations de pression (32, 34) et la canalisation de connexion (40).

3. Ensemble transducteur à réglage automatique du zéro selon la revendication 1 ou la revendication 2, dans lequel le microprocesseur (20) sert à émettre un signal approprié pour utilisation sur une boucle bifilaire.

4. Ensemble transducteur à réglage automatique du zéro selon la revendication 1, la revendication 2 ou la revendication 3, dans lequel le microprocesseur est un processeur Motorola 6800.

5. Ensemble transducteur à réglage automatique du zéro selon l'une quelconque des revendications précédentes, dans lequel le distributeur de pression (30) est un distributeur manoeuvrable à distance.

6. Procédé de mise en oeuvre d'un ensemble transducteur de pression comportant un transducteur (12) avec deux entrées (14, 16) pour recevoir deux pressions (P1, P2) distinctes sur deux canalisations de pression (31, 34) distinctes, le procédé comprenant :
l'établissement d'une communication entre les deux canalisations de pression (32, 34) distinctes tout en fermant la communication entre les pressions (P1, P2) distinctes externes appliquées aux canalisations de pression (32, 34) et le transducteur de pression (12) pour égaliser la pression entre les première et seconde canalisations de pression ;
la mesure d'un signal de sortie du transducteur (12), la communication étant établie entre les première et seconde canalisations de pression (32, 34); et,
l'utilisation du signal de sortie mesuré de l'ensemble transducteur pour effectuer le réglage automatique du zéro de l'ensemble transducteur de pression ;
caractérisé en ce que la communication entre les deux canalisations de pression (32, 34) distinctes est établie après un intervalle de temps prédéterminé ou lorsqu'un utilisateur le souhaite, et en ce que ladite étape d'utilisation comprend la délivrance du signal de sortie mesuré à un microprocesseur (20), qui est sensible à la valeur du signal de sortie mesuré, pour réaliser le réglage automatique du zéro de l'ensemble transducteur de pression en recalibrant l'ensemble transducteur de pression de telle façon que, lorsque ladite communication entre les deux canalisations de pression (32, 34) distinctes est ensuite fermée, ladite valeur du signal de sortie mesuré est traitée comme une indication de zéro pour le transducteur de pression (12), jusqu'à ce que ladite communication entre les deux canalisations de pression distinctes soit de nouveau établie, et en ce que le microprocesseur sert à provoquer ladite fermeture de la communication entre les deux canalisations de pression (32, 34) distinctes après recalibrage, le microprocesseur (20) établissant ladite communication entre les deux canalisations de pression (32, 34) distinctes chaque fois qu'un intervalle de temps de maintenance prédéterminé, en fonction de la dérive supposée du transducteur de pression (12) par rapport à sa position de zéro, s'est écoulé.

7. Procédé selon la revendication 6, pour mettre en oeuvre un ensemble transducteur de pression, dans lequel deux canalisations de pression distinctes (32, 34) sont contenues dans un distributeur de pression (30).
